# EUROPÄISCHE PATENTSCHRIFT

(11) **EP 0 570 677 B1**
(45) Veröffentlichungstag und Bekanntmachung des Hinweises auf die Patenterteilung: **20.12.1995**
(21) Anmeldenummer: 93104204.8
(22) Anmeldetag: 16.03.1993
(51) Int. Cl.: A47J 43/046, A47J 43/07

(54) **Zerkleinerungs- und Mischeinrichtung für eine Vielzweckküchenmaschine**
Chopping and mixing tool for multi-purpose food processor
Outil broyeur-mélangeur d'un robot de cuisine

(30) Priorität: 16.05.1992 DE 4216335
(43) Veröffentlichungstag der Anmeldung: 24.11.1993
(73) Patentinhaber: Braun Aktiengesellschaft, Frankfurt am Main (DE)
(72) Erfinder: Rebordosa, Antonio, W-6370 Oberursel (DE); Golob, Jürgen, W-6382 Friedrichsdorf (DE)

(56) Entgegenhaltungen:
- EP-A- 0 217 132
- DE-A- 1 529 257
- DE-A- 3 404 348
- DE-U- 8 621 596
- FR-A- 1 053 466
- FR-A- 1 207 070
- NL-C- 112 849
- US-A- 2 003 829
- US-A- 3 393 900

## Beschreibung

Die Erfindung bezieht sich auf eine Zerkleinerungs- und Mischeinrichtung für eine Vielzweckküchenmaschine mit einer in einem Behälter einsetzbaren, einen Getriebearm aufweisenden Getriebeeinrichtung, die eine Eingangswelle aufweist, die von einer von einem Motor der Vielzweckküchenmaschine angetriebene Hauptantriebswelle in Drehung versetzt wird und einer außerhalb der Eingangswelle am Getriebearm gelagerten Ausgangswelle, an die mindestens ein um seine Achse drehbar gelagertes Arbeitswerkzeug zum Zubereiten von Nahrungsmitteln anschließbar ist, wobei das Arbeitswerkzeug von mindestens einem rotierenden Messer gebildet wird.

Es ist bereits aus der EP-0 217 132 B1 eine Zerkleinerungs- und Mischeinrichtung für eine Vielzweckküchenmaschine bekannt, die mit einem antreibbaren Schneebesen zum Schlagen von Sahne ausgestattet ist, wobei das erste Arbeitswerkzeug über eine vom Motor angetriebene Hauptantriebswelle, über ein in einem antreibbaren Getriebegehäuse aufgenommenes Getriebe und über eine Ausgangswelle angetrieben wird. Weiterhin wirkt das erste Arbeitswerkzeug mit einem zweiten, als Abweiser ausgebildeten Arbeitswerkzeug zusammen, der zwischen der Außenwand des Behälters und dem Schneebesen vorgesehen ist und der an die Wand des Behälters gedrückte Nahrungsmittelgut wieder zum Arbeitswerkzeug bewegen soll. Bei dieser Zerkleinerungs- und Mischeinrichtung ist es als weniger vorteilhaft anzusehen, daß ein Zerkleinern von Nahrungsmitteln, wenn beispielsweise gekochte Kartoffeln oder ähnlich festere Nahrungsmittel püriert oder zerkleinert und verrührt werden sollen, nicht optimal möglich ist.

Weiterhin ist aus der FR-A-1 053 466 eine industriell einsetzbare Zerkleinerungs- und Mischeinrichtung für eine Metzgerei bekannt, bei der in Bodennähe des Arbeitsbehälters mehrere übereinander angeordnete und im wesentlichen zum Boden des Arbeitsbehälters parallel verlaufende Messer auf einer Welle befestigt sind, wobei die Messer bei Rotation zum Zerkleinern von Nahrungsmitteln dienen. Den Messern ist eine kammartige Zu- und Abführeinrichtung zugeordnet, die über eine separate Antriebswelle im Arbeitsbehälter rotiert und dabei den Messern die Nahrungsmittel zuführt. Die Zu- und Abführeinrichtung erstreckt sich über die gesamte Höhe der Messeranordnung, so daß bei jeder Umdrehung die bis zur Höhe der Zu- und Abführeinrichtung im Arbeitsbehälter befindlichen Nahrungsmittel vollständig ergriffen werden müssen, was einen erheblichen Energieaufwand erforderlich macht, der von der Antriebseinrichtung der im Haushalt üblicherweise benutzten Küchenmaschinen meist nicht aufgebracht werden kann. Des weiteren ist ein gutes Durchmischen der Nahrungsmittel nur schwer möglich, da die kammartige Zu- und Abführeinrichtung die Nahrungsmittel lediglich vor sich herschiebt.

Schließlich ist noch aus der DE-A-34 04 348 eine Zerkleinerungs- und Mischeinrichtung für eine Vielzweckküchenmaschine der eingangs beschriebenen Art bekannt, bei der ein im wesentlichen senkrecht zum Boden des Arbeitsbehälters angeordnetes Scheibenmesser im Arbeitsbehälter rotiert, das über eine Ausgangswelle mit einem Getriebearm drehbar verbunden ist, der wiederum mit der Eingangswelle der Küchenmaschine drehbar verbunden ist. Auch hier muß beim Zerkleinerungsvorgang das Kreismesser die im Arbeitsbehälter befindlichen Nahrungsmittel vor sich herschieben, was einerseits mit hohem Energieaufwand verbunden ist und andererseits ein schnelles Durchmischen der Nahrungsmittel kaum ermöglicht. Ein intensives Durchrühren bzw. Mixen von Nahrungsmitteln ist bei dieser Anordnung kaum möglich.

Aufgabe der Erfindung ist es nun, eine Zerkleinerungs- und Mischeinrichtung für eine Vielzweckküchenmaschine zu schaffen, die auch im Behälter sich befindende, größere und festere Nahrungsmittel ohne Bildung eines Nahrungsmittelstaus schnellstens erfaßt und in kürzester Zeit zerkleinert und dabei sowohl gut verrührt wie auch bei der Verwendung von flüssigen Nahrungsmitteln diese einwandfrei mixt.

Gelöst wird die Aufgabe erfindungsgemäß dadurch, daß das rotierende Messer mit mindestens einer die Nahrungsmittel leitenden Zuführ- und Abführeinrichtung zusammenwirkt, daß die Zu- und Abführeinrichtung von einer oberhalb des Messers angeordneten Platte gebildet wird, deren vorderes Endstück weg vom Boden und deren hinteres Endstück zum Boden gerichtet ist.

Durch die erfindungsgemäße Platte wird einerseits das Messer von außen geschützt, und andererseits werden die Nahrungsmittel besonders schnell und wirksam püriert, indem diese durch die Platte besonders schnell zum Messer hin und nach Zerkleinern wieder weggeführt werden. Dieser Nahrungsmittelkreislauf wird dabei so klein gehalten, daß ein schneller Püriervorgang erfolgt. Selbstverständlich können auch Kräuter oder sonstige Gemüse mittels dieser Zerkleinerungs- und Mischeinrichtung beliebig zerkleinert werden, was für Grüne Soße von Vorteil ist.

Diese Zu- und Abführeinrichtung ist seitlich wesentlich mehr gegenüber den Nahrungsmitteln geöffnet, so daß sie besonders gut zum Zerkleinern und Mischen von Kräutern und sonstigen Gemüsen geeignet ist. Die als Platte ausgebildete Zu- und Abführeinrichtung ist universell einsetzbar, da durch sie sowohl flüssige wie auch festere Nahrungsmittel dem rotierenden Messer schnell zugeführt werden, so daß die Nahrungsmittel sehr gut zerkleinert bzw. vermischt werden.

Dadurch, daß im vorderen Bereich der Platte das Endstück weg vom Boden abgeknickt ist, werden mehr Nahrungsmittel schneepflugähnlich dem Messer zugeführt, was eine schnellere Bearbeitung mit sich bringt. Im hinteren Bereich ist das Endstück zum Boden hin abgeknickt, wodurch ein gewisser Stau der Nahrungsmittel am Messer erreicht wird, so daß diese nochmals intensiver verrührt bzw. zerkleinert werden können, bis sie über das Endstück nach unten abgelenkt und zum Boden hin gedrückt werden, um so aus dem Wirkungsbereich der Zu- und Abführeinrichtung zu gelangen, bis sie wieder bei einer der nächsten Umdrehungen neu vom Messer erfaßt werden. Handelt es sich bei den Nahrungsmitteln um verhältnismäßig flüssige Nahrungsmittel, so werden sie nahezu bei jeder Umdrehung der Zu- und Abführeinrichtung im Behälter vom Messer erfaßt; handelt es sich bei den Nahrungsmitteln um Kräuter oder ähnlich festere Bestandteile, so kann es hierbei vorkommen, daß diese erst nach mehr als einer Umdrehung der Zu- und Abführeinrichtung von dieser neu erfaßt werden, da dieses hintere Endstück immer einen gewissen Anteil von Nahrungsmitteln vor sich herschiebt. Durch die Größe der Abwinkelung des hinteren abgewinkelten Endstückes und die Beschaffung der Nahrungsmittel wird die Durchlässigkeit der Nahrungsmittel durch die Zu- und Abführeinrichtung bestimmt.

Um den Nahrungsmittelstau bzw. die Durchlässigkeit an der Zu- und Abführeinrichtung von Hand festlegen zu können, wird in einer Weiterbildung der Erfindung vorgeschlagen, daß die Platte gegenüber dem Messer höhenverstellbar ist. Je höher also die Zu- und Abführeinrichtung gegenüber dem Messer angeordnet ist, desto geringer wird der Stau der Nahrungsmittel am Messer, desto weniger heftig werden aber auch die Nahrungsmittel zerkleinert bzw. vermischt. Vorteilhaft ist es dabei, daß die Antriebswelle in einem am Getriebearm befestigten Rohrteil ausgebildet ist, auf dem die Zu- und Abführeinrichtung verschiebbar gelagert ist. Das die Antriebswelle des Messers umgebende Rohrteil läßt sich leicht am Getriebearm integrieren, so daß sich eine einfache Führung für die Zu- und Abführeinrichtung ergibt, die, je höher der Druck der Nahrungsmittel bei der Rotation des Getriebearms in dem Behälter gegen die Platte und die abgewinkelten Endstücke ist, sich umso mehr nach oben - als weg von den Nahrungsmitteln - auf dem Rohrteil verschiebt. Die Platte wird also bei ihrer Rotation im Behälter förmlich von den Nahrungsmitteln getragen, d.h., es stellt sich jeweils bei einer bestimmten Drehzahl der Platte, bei dem vorhandenen Gewicht der Platte und bei den zu verarbeitenden Nahrungsmitteln eine Höhe der Platte gegenüber dem Messer ein, durch die eine optimale Zerkleinerung bzw. Verrührung der Nahrungsmittel erreicht wird.

In einer Weiterbildung der Erfindung ist vorgesehen, daß zwischen dem Rohrteil und der Zu- und Abführeinrichtung eine Feststelleinrichtung ausgebildet ist. Durch die Feststelleinrichtung kann die Platte mit den Endstücken in jeder beliebigen Lage gegenüber dem Messer am Rohrteil befestigt werden. Je näher die Platte am Messer ausgebildet ist und je fester die Nahrungsmittel sind, desto höher ist der Energieaufwand der Küchenmaschine zum Zerkleinern bzw. Verrühren der Nahrungsmittel. Dieser Leistungsbedarf ist bei einer am Rohrteil frei entlanggleitenden Platte geringer, da die Platte den Widerstand der Nahrungsmittel stets ausweichen kann, wenn der Druck auf sie zu groß wird.

Damit die Endstücke in Umfangsrichtung und radial zum Mittelpunkt des Behälters bzw. zu der Hauptantriebswelle der Küchenmaschine stets in gleicher Richtung verlaufen, also auch die Platte mit den Endstücken sich nicht gegenüber dem Rohrteil verdreht, wird vorgeschlagen, daß am Rohrteil mindestens eine parallel zur Achse verlaufende Nut ausgebildet ist, in die ein an der Zu- und Abführeinrichtung ausgebildeter Vorsprung eingreift.

Besonders vorteilhaft ist es, daß zwischen der Zu- und Abführeinrichtung und der Eingangswelle ein vom Getriebegehäuse in den Behälter hineinragender Abweiser ausgebildet ist. Durch den Abweiser werden die Nahrungsmittel zusätzlich zu der Zu- und Abführeinrichtung dem Messer zugeführt, so daß eine noch intensivere Durchmischung und Zerkleinerung der Nahrungsmittel erfolgt. Dies insbesondere auch dann, wenn das Messer gegen den Uhrzeigersinn und das Getriebegehäuse im Uhrzeigersinn gedreht werden.

Um möglichst wenig Nahrungsmittel an dem am zentral im Behälter ausgebildeten Lagerteil zu lassen, ist es vorteilhaft, daß der Abweiser eine in etwa vertikal verlaufende Innenkante aufweist, die in etwa mit gleichem Abstand bzw. parallel zum Außenumfang des die Antriebswelle umgebenden Lagerteils des Behälters verläuft. Dabei ist es vorteilhaft, wenn der Abweiser mit dem drehbar gelagerten Getriebegehäuse fest verbunden ist.

Damit die Platte in Verbindung mit dem Messer sich nicht nur selbst die Nahrungsmittel herbeischafft und nach Verarbeiten wieder abtransportiert, ist in einer Weiterbildung der Erfindung vorgesehen, daß der Getriebearm zusätzlich zum Messer um die Hauptantriebswelle der Vielzweckküchenmaschine im Behälter rotiert. Dadurch, daß die Platte und das Messer am rotierenden Getriebearm ausgebildet sind, drehen sich diese im Behälter und können somit bei größeren Behälterdurchmessern auch alle Nahrungsmittel schnell erfassen. Hierdurch wird nochmals eine intensivere Durchmischung und schnellere Zerkleinerung der Nahrungsmittel erreicht. Ein rotierender Getriebearm empfiehlt sich insbesondere bei Behältern, deren Aufnahmeraum erheblich größer ist als der Raum, der sich durch das in den Aufnahmeraum des Behälters hineinreichende Arbeitswerkzeug ergibt.

Um eine noch heftigere und schnellere Durchmischung und Zerkleinerung der Nahrungsmittel zu erreichen, ist nach einer weiteren vorteilhaften Ausgestaltung der Erfindung vorgesehen, daß das Messer im Uhrzeigersinn und das Getriebegehäuse gegen den Uhrzeigersinn rotiert. Durch die entgegengesetzten Drehrichtungen von Messer und Zu- und Abführeinrichtung bzw. Getriebearm werden die Nahrungsmittel der Zu- und Abführeinrichtung besser zugeführt und dann durch das in entgegengesetzter Richtung laufende scharfe Messer schlagartig mit größerer Beschleunigung erfaßt, so daß ein besonders wirkungsvoller Schneideffekt erzielt wird.

Außerdem ist es vorteilhaft, daß das in dem Getriebegehäuse aufgenommene Getriebe aus einem Antriebsrad zum Anschluß an die als Steckwelle ausgebildete Ausgangswelle für das Messer, einem Zwischenrad und einem auf der Hauptantriebsachse angeordneten Ritzel besteht, wobei das Zwischenrad über ein mit diesem fest verbundenes zweites Ritzel und einem weiteren, oberhalb des ersten Ritzels angeordneten vierten feststehenden Zahnrad zum Antrieb des Getriebegehäuses in Antriebsverbindung steht.

Eine zusätzliche Möglichkeit eines feststehenden Zahnrades besteht gemäß einer Weiterbildung der erfindungsgemäßen Vorrichtung darin, daß das vierte Zahnrad im Deckel der Küchenmaschine und auf einem Zapfen des ersten Ritzels gelagert ist. Vorteilhaft ist es auch, daß das Zwischenrad auf einer Achse drehbar gelagert ist, die mit ihrem einen Ende im Deckel und mit ihrem anderen Ende im Boden des Getriebegehäuses aufgenommen ist. In weiterer Ausgestaltung der Erfindung ist es vorteilhaft, daß das Zwischenrad im Getriebegehäuse auf dem vierten Zahnrad abrollt und das Getriebegehäuse antreibt. Hierdurch wird auf einfache Weise das Getriebegehäuse in Drehbewegung versetzt.

Eine zusätzliche Möglichkeit gemäß einer Weiterbildung der erfindungsgemäßen Vorrichtung besteht darin, daß das Übersetzungsverhältnis zwischen dem auf der Hauptantriebsachse angeordneten Ritzel des Getriebeblocks und dem Zwischenrad mindestens 1:2 groß ist. Hierdurch werden beste Rührergebnisse erzielt, so daß die Nahrungsmittel gleichmäßig im ganzen Behälterraum püriert werden.

Von Vorteil ist es ferner, daß das am Getriebegehäuse angeordnete Ritzel gleichlaufend zum Messer angetrieben wird.

Ein Ausführungsbeispiel der Erfindung ist in der Zeichnung dargestellt und wird im folgenden näher erläutert. Es zeigen:
- Fig. 1: eine perspektivische Darstellung einer Vielzweckküchenmaschine mit einem Zerkleinerungs- und Mischwerkzeug zum Zerkleinern, Rühren, Schlagen oder Pürieren von Nahrungsmitteln,
- Fig. 2: eine perspektivische Darstellung des ersten Zerkleinerungs- und Mischwerkzeuges nach Fig. 1 von unten her, in vergrößerter Darstellung, allerdings ohne Getriebearm,
- Fig. 3: eine perspektivische Draufsicht auf das erfindungsgemäße Zerkleinerungs- und Mischwerkzeug mit Getriebe und Platte als Zu- und Abführeinrichtung,
- Fig. 4: eine Teilschnittdarstellung durch die Zerkleinerungs- und Mischeinrichtung entlang der Schnittlinie IV-IV gemäß Fig. 3 und
- Fig. 5: einen Längsschnitt durch die in Fig. 3 dargestellte Zerkleinerungs- und Mischeinrichtung, allerdings so, als wäre sie gemäß Fig. 1 in die Vlelzweckküchenmaschine eingesetzt.

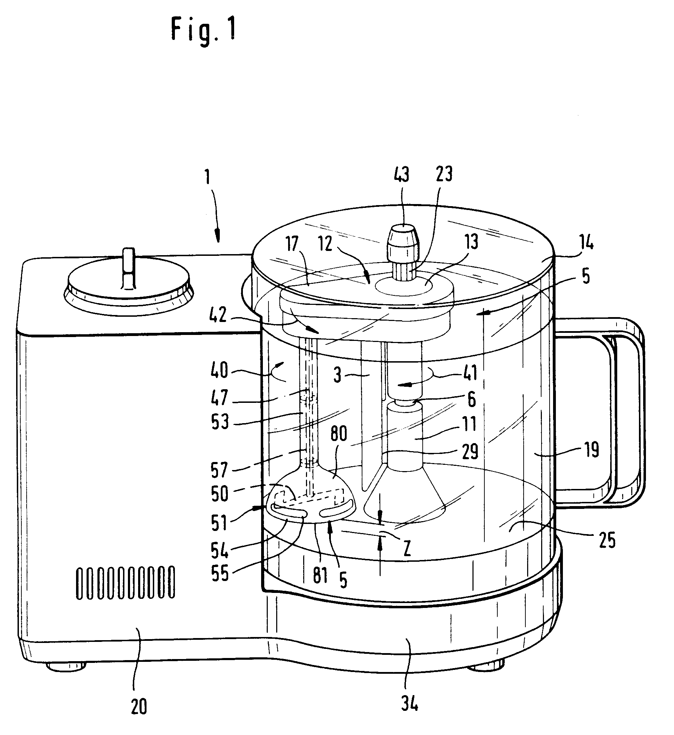

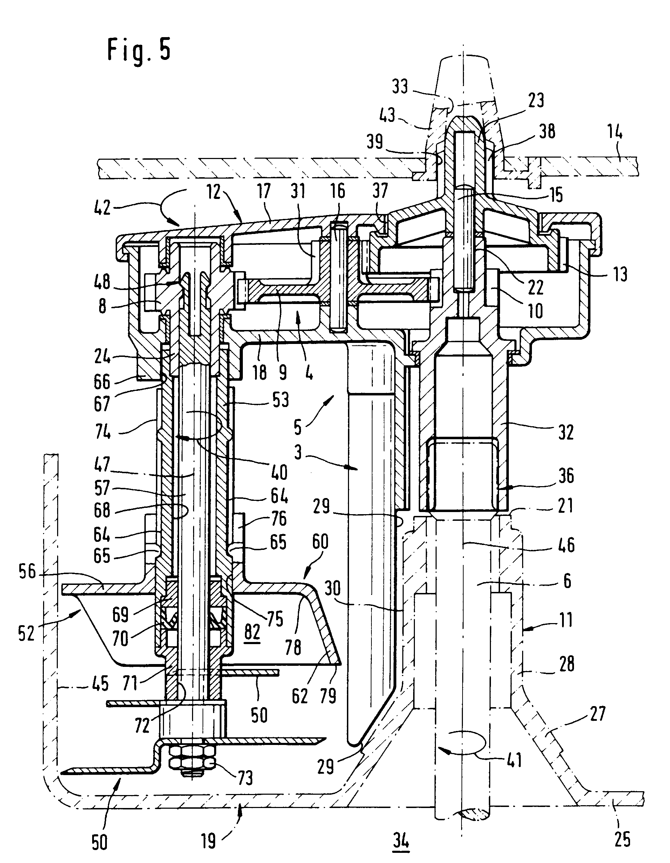

In Fig. 1 ist mit 1 eine Vielzweckküchenmaschine bezeichnet, die aus einem auf einem Gerätesockel 34 angeordneten Motorgehäuse 20 besteht, in dem ein Elektromotor angeordnet ist, der über eine in der Zeichnung nicht dargestellte Getriebeanordnung eine Hauptantriebswelle 6 antreibt, auf der die Zerkleinerungs- und Mischeinrichtung 5 nach Fig. 5 mittels der Kupplungsanordnung 36 drehfest kuppelbar ist.

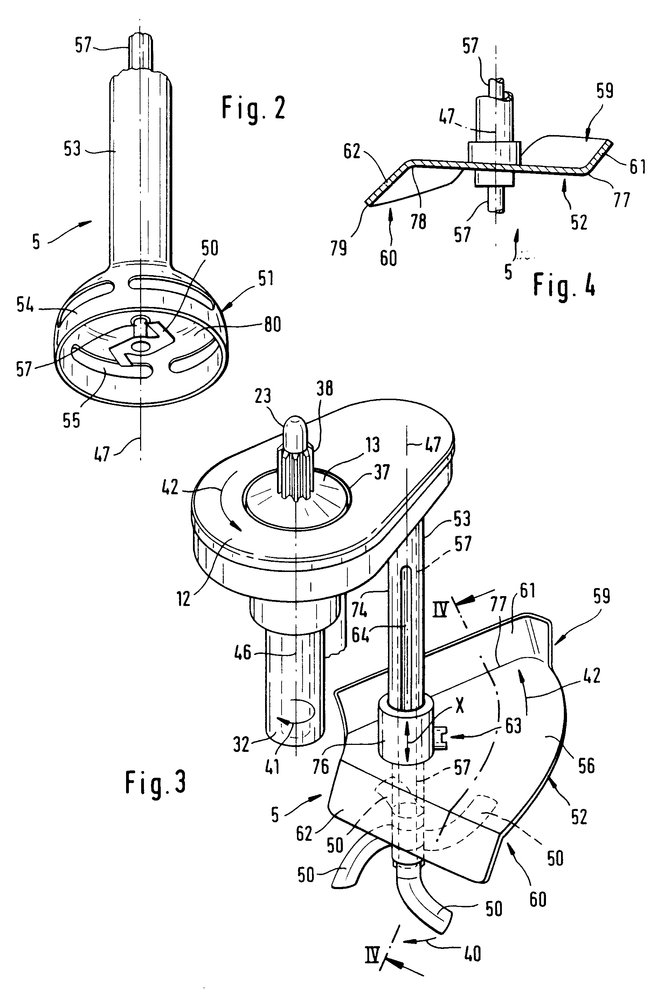

Zur Küchenmaschine 1 gehört nach Fig. 1 ferner ein auf dem Gerätesockel 34 zentrierter Behälter 19, der zur Aufnahme von Nahrungsmitteln dient, die von dem an der Zerkleinerungs- und Mischeinrichtung 5 ausgebildeten, sich drehenden Messer 50 zerkleinert, geschlagen bzw. verrührt werden. Die Zerkleinerungs- und Mischeinrichtung 5 steht nach Fig.5 über ein Getriebe 4 (Fig. 3) mit der Hauptantriebswelle 6 der Vielzweckküchenmaschine 1 in Drehverbindung. Am Getriebegehäuse 12 ist ein Abweiser 3 ausgebildet, der sich mit diesem dreht.

Wie aus Figur 5 hervorgeht, besteht die Antriebseinrichtung der Zerkleinerungs- und Mischeinrichtung 5 weiterhin aus einer am Boden 18 des Getriebegehäuses 12 nach unten herausragenden Antriebswelle 32, die über die Kupplungseinrichtung 36 mit der Hauptantriebswelle 6 drehfest kuppelbar ist, wobei letztere mit dem in der Zeichnung nicht dargestellten Elektromotor über ein Zahnriemengetriebe in Antriebsverbindung steht. Dabei durchdringt die Hauptantriebswelle 6 einen im Behälter 19 zentral angeordneten Schacht 11 und ragt am oberen Ende 21 des Schachtes 11 noch in den Behälter 19 hinein. Der Schacht 11 besteht im Bereich des Behälterbodens 25 aus einem nach oben sich kegelstumpfförmig verjüngenden Schachtteil 27 und einem sich daran anschließenden zylinderförmigen Rohrteil 28, die konzentrisch zur Mittelachse 46 des Behälters 19 verlaufen.

An die Hauptantriebswelle 6 ist nach Fig. 5 die Abtriebswelle 32 angekuppelt, an deren oberen Ende sich im Getriebegehäuse 12 ein erstes Ritzel 10 befindet, das an seinem oberen Ende eine Bohrung 22 zur Aufnahme eines Zapfens 15 aufweist, auf dem ein Zahnrad 13 gelagert ist. Das Zahnrad 13 durchdringt den Deckel 17 des Getriebegehäuses 12 über die Bohrung 37 und weist an seinem oberen Ende einen am Deckel 17 angeformten Lagerzapfen 23 auf, der in einer im Deckel 14 des Behälters 19 in einer Lagerbuchse 43 vorgesehenen Bohrung 33 gelagert ist. Dabei greift eine am Lagerzapfen 23 ausgebildete Verzahnung 38 in eine in der Bohrung 33 entsprechende Verzahnung 39 drehfest ein.

Das Zerkleinerungs- und Mischwerkzeug 5 schließt sich nach den Figuren 3 und 5 an das Getriebegehäuse bzw. den Getriebearm 12 seitlich an, in dem das Getriebe 4 aufgenommenen ist. Zu dem Getriebe 4 gehört nach Fig. 5 ein Antriebsrad 8 mit einer Ausgangswelle 24 zum Anschluß der als Steckwelle ausgebildeten Antriebswelle 57 für das Messer 50, ein Zwischenrad 9 und das der Hauptantriebsachse 6 zugeordnete Ritzel 10.

Das gegenüber dem Antriebsrad 8 und dem Ritzel 10 im Durchmesser größere und dazwischenliegende Zwischenrad 9 weist nach Fig. 5 oberhalb des Zwischenrades 9 ein angeformtes zweites Ritzel 31 auf, das an dem feststehenden Zahnrad 13 abrollt und dadurch das Getriebegehäuse bzw. den Getriebearm 12 entgegen der Abtriebsrichtung antreibt. Das Zwischenrad 9 ist auf einer Achse 16 drehbar gelagert, die mit ihrem einen Ende im Deckel 17 und mit ihrem anderen Ende im Boden 18 des Getriebegehäuses 12 aufgenommen ist. Die Antriebswelle 57 ist über eine Kupplungseinrichtung 48 mit dem Antriebsrad 8 drehfest kuppelbar, so daß beide sich um die Achse 47 drehen.

Am Boden 18 des Getriebearms 12 ist ein nach Fig. 5 nach unten hervorstehender, rohrförmiger Ansatz 66 ausgebildet, in dessen Bohrung 67 ein Rohrteil 53 eingesetzt und über in der Zeichnung nicht dargestellte Befestigungsmittel mit dem rohrförmigen Ansatz 66 drehfest befestigt ist. Das Rohrteil 53 erstreckt sich konzentrisch zur Achse 47 gemäß Fig. 5 in Richtung zum Behälterboden 25 hin und weist eine Längsbohrung 68 auf, in der die Antriebswelle 57 aufgenommen bzw. über ein im unteren Abschnitt ausgebildetes Lager 69 gelagert ist. An das Lager 69 schließt sich gemäß Fig. 5 nach unten in der Längsbohrung 68 ein Radialwellendichtring 70 an, der ein Eindringen von Schmutz und Wasser über die Längsbohrung 68 in das Getriebe 4 verhindert. Das Rohrteil 53 endet mit einer rohrförmigen Kappe 71, deren Bohrung 72 ebenfalls als zweites Lager für die Antriebswelle 57 dient.

Unterhalb der Kappe 71 ragt nach Fig. 5 das freie Ende der Antriebswelle 57 heraus, auf dem die diametral gegenüberliegenden Messer 50 mittels einer Schraubverbindung 73 befestigt sind. Die Messer 50 sind in Längsrichtung der Achse 47 auf verschiedenen Höhen im unteren Bereich des Behälters 19 an der Antriebswelle 57 angeordnet, wobei das untere Messer 50 geringfügig oberhalb des Bodens 25 des Behälters 19 angeordnet ist.

An der zylinderförmig ausgebildeten Mantelfläche 74 des Rohrteils 53 wird über eine in einer Platte 56 ausgebildete Bohrung 75 diese auf dem Rohrteil 53 axial verschiebbar geführt. Die Bohrung 75 ist in einem Rohransatz 76 ausgebildet. Der Rohransatz 76 weist an der Bohrung 75 hervorstehende Vorsprünge 65 auf, die in an der Mantelfläche 74 ausgebildeten, entlang der Achse 47 verlaufenden Nuten 64 eingreifen. Hierdurch ist die Platte 56 drehfest, aber verschiebbar am Rohrteil 53 geführt.

Nach den Figuren 3 bis 5 ist an der Platte 56 im vorderen Bereich 59 ein Endstück 61 ausgebildet, das nach oben in Richtung zum Getriebearm 12 gerichtet ist (Figuren 3 und 4) und deren Knickstelle 77 im wesentlichen zur Mittelachse 46 radial verläuft. Weiterhin ist an der Platte 56 auf der dem Rohrteil 53 gegenüberliegenden hinteren Endbereich 60 ein weiteres hinteres Endstück 62 ausgebildet, das gemäß Fig. 5 zum Boden 25 des Behälters 19 hin abgeknickt ist und deren Knickstelle 78 ebenfalls im wesentlichen radial zur Mittelachse 46 verläuft. Die untere Kante 79 des Endstückes 62 verläuft geringfügig oberhalb des oberen Messers 50, so daß beim Drehen des Messers 50 um die Mittelachse 46 im Behälter 19 auch dieses Messer 50 ausreichend von Nahrungsmitteln erfaßt wird. Die Messer 50 verlaufen entgegen der Drehrichtung 40 sichelförmig nach außen.

Nach den Figuren 1 und 2 besteht das erste Zerkleinerungs- und Mischwerkzeug 5 ebenfalls aus einem Rohrteil 53, das, wie in Fig. 5 dargestellt, gleichermaßen am Getriebearm 4 befestigt ist. Innerhalb des Rohrteils 53 verläuft die Antriebswelle 57, die in den vom glockenförmig ausgebildeten Gehäuseteil 54 gebildeten Aufnahmeraum 80 hineinragt. Der glockenförmig ausgebildete Gehäuseteil 54 weist an seinem Umfang horizontal zum Boden 25 des Behälters 19 verlaufende Schlitze 55 auf, von denen nach den Figuren 1 und 2 vier am Umfang gleichmäßig verteilt sind. Am Ende der Antriebswelle 57 im Aufnahmeraum 80 ist das Messer 50 befestigt, das aus zwei im wesentlichen diametral gegenüberliegenden Klingen gebildet wird.

Wie aus Fig. 3 noch ersichtlich ist, kann, nachdem die Platte 56 über den Rohransatz 76 auf dem Rohrteil 53 in Richtung X verschoben ist, dieses mittels einer als Schraube ausgebildeten Feststelleinrichtung 63 auf dem Rohrteil 53 befestigt werden.

Wie aus Fig. 5 weiter hervorgeht, wird über das im Getriebegehäuse 12 angeordnete Ritzel 10, das Zwischenrad 9, das Antriebsrad 8 und die Ausgangswelle 24 die Antriebswelle 57 mit dem zugehörigen Messer gegenläufig zur Drehrichtung des Getriebegehäuses 12 gedreht. Das Messer 50 wird also, wie dies die Figuren 1, 3 und 5 deutlich zeigen, anhand des die Drehrichtung angebenden Pfeiles 40 im Uhrzeigersinn, das Getriebegehäuse 12, durch den Pfeil 42 angezeigt, entgegengesetzt dem Uhrzeigersinn und die Eingangswelle 32, durch den Pfeil 41 angezeigt, wiederum im Uhrzeigersinn gedreht.

Der Abweiser 3 weist nach Fig. 5 eine in etwa vertikal verlaufende Innenkante 29 auf, die in etwa mit gleichem Abstand parallel zur Oberfläche 30 des Schachtes 11 (Fig. 3) verläuft. Hierdurch wird das an der Oberfläche 30 des Schachtes 11 haftende Nahrungsmittelgut (nicht dargestellt) ständig entfernt und wieder dem Messer 50 zugeführt.

Die Wirkungsweise des Zerkleinerungs- und Mischwerkzeuges, in der Küchenmaschine eingesetzt, ist folgende.

Wird gemäß Fig. 1 die Küchenmaschine 1 in Betrieb gesetzt, so dreht sich das Messer 50 sowohl um seine eigene Achse 47 im Uhrzeigersinn gemäß Pfeilrichtung 40 selbst, als auch noch zusammen mit der Zu- und Abführeinrichtung 51 am Getriebearm 12 um die Mittelachse 46 entgegen dem Uhrzeigersinn in Pfeilrichtung 42. Im Boden 25 des Behälters 19 befindliche Nahrungsmittel gelangen in den Aufnahmeraum 80 des glockenförmig ausgebildeten Gehäuseteils 54 und werden vom Messer 50 erfaßt und zerkleinert. Da das freie Ende, also die Stirnkante 81 des Gehäuseteils 54 mit Abstand Z zum Boden 25 des Behälters 19 verläuft, können ausreichend Nahrungsmittel in den Aufnahmeraum 8 gelangen, dies allerdings nur dann, wenn die Nahrungsmittel verhältnismäßig kleinstückig ausgebildet sind. Daher eignet sich die in den Figuren 1 und 2 dargestellte Zu- und Abführeinrichtung im wesentlichen nur für dünn- bis dickflüssige Nahrungsmittel, die dann auch über die Schlitze 55 dem Messer 50 zu- und abgeführt werden können.

Für gröbere Nahrungsmittel eignet sich das in den Figuren 3 bis 5 dargestellte Zerkleinerungs- und Mischwerkzeug mit der Zu- und Abführeinrichtung 52, da sie durch das in Umfangsrichtung vordere Endstück 61 viele Nahrungsmittel aufnehmen kann, die dann dem Messer 50 zugeführt werden. Das im hinteren Bereich 60 ausgebildete Endstück 62 ist zum Boden hin abgeknickt, so daß die Nahrungsmittel, die in den unterhalb der Platte 56 ausgebildeten Aufnahmeraum 82 gelangen, von dem hinteren Endstück 62 in Drehrichtung 42 abgebremst und so lange im Aufnahmeraum 82 gehalten werden, bis sie vom Messer 50 ausreichend zerkleinert worden sind und sich wieder aus dem Aufnahmeraum 82 entfernen. Das vordere Endstück 61 schafft, ähnlich wie eine Auffangrinne, Nahrungsmittel heran, während das hintere Endstück 62 die im Aufnahmeraum 82 befindlichen Nahrungsmittel länger zurückhält, um so den Zerkleinerungsvorgang wie den Misch- oder Püriervorgang zu beschleunigen. Wird die Zu- und Abführeinrichtung 52 nach Fig. 5 allerdings auf dem Rohrteil 53 so weit nach oben verschoben, daß die Messer 50 nicht mehr seitlich von dem hinteren Endstück 62 begrenzt sind, sondern frei im Behälter 19 rotieren, so ist der Zerkleinerungsvorgang weniger heftig und das hintere Endstück 62 dient nicht mehr so intensiv als Prallplatte.

Nach Beenden eines Zerkleinerungs-Mischvorganges kann nach Abheben des Deckels 14 vom Behälter 19 das Zerkleinerungs- und Mischwerkzeug aus dem Behälter 19 entfernt werden und es können die Nahrungsmittel aus dem Behälter 19 entnommen werden.

Bei Einsatz anderer Arbeitswerkzeuge, wie Knethaken, Reibscheiben, Schneebesen, Messer etc. kann die Vielzweckküchenmaschine 1 für entsprechend andere Arbeiten genutzt werden.

## Patentansprüche

1. Zerkleinerungs- und Mischeinrichtung für eine Vielzweckküchenmaschine mit einer in einem Behälter (19) einsetzbaren, einen Getriebearm (12) aufweisenden Getriebeeinrichtung (4), die eine Eingangswelle (32) aufweist, die von einer von einem Motor der Vielzweckküchenmaschine angetriebene Hauptantriebswelle (6) in Drehung versetzt wird und einer außerhalb der Eingangswelle (32) am Getriebearm (12) gelagerten Ausgangswelle (24), an die mindestens ein um seine Achse (47) drehbar gelagertes Arbeitswerkzeug (5) zum Zubereiten von Nahrungsmitteln anschließbar ist, wobei das Arbeitswerkzeug (5) von mindestens einem rotierenden Messer (50) gebildet wird,
**dadurch gekennzeichnet**,
daß das rotierende Messer (50) mit mindestens einer die Nahrungsmittel leitenden Zuführ- und Abführeinrichtung (52) zusammenwirkt, daß die Zu- und Abführeinrichtung (52) von einer oberhalb des Messers (50) angeordneten Platte (56) gebildet wird, deren vorderes Endstück (61) weg vom Boden (25) und deren hinteres Endstück (62) zum Boden (25) gerichtet ist.

2. Zerkleinerungs- und Mischeinrichtung nach Anspruch 1,
**dadurch gekennzeichnet**,
daß die Platte (56) im wesentlichen parallel zum Boden (25) des Behälters (19) verläuft, die in Umfangsrichtung am vorderen (59) und am hinteren (60) Bereich abgewinkelte Endstücke (61, 62) aufweist.

3. Zerkleinerungs- und Mischeinrichtung nach Anspruch 2,
**dadurch gekennzeichnet**,
daß die Platte (56) gegenüber dem Messer (50) höhenverstellbar ist.

4. Zerkleinerungs- und Mischeinrichtung nach Anspruch 3,
**dadurch gekennzeichnet**,
daß die Antriebswelle (57) in einem am Getriebearm (12) befestigten Rohrteil (53) ausgebildet ist, auf dem die Platte (56) verschiebbar gelagert ist.

5. Zerkleinerungs- und Mischeinrichtung nach Anspruch 4,
**dadurch gekennzeichnet,**
daß zwischen dem Rohrteil (53) und der Platte (56) eine Feststelleinrichtung (63) ausgebildet ist.

6. Zerkleinerungs- und Mischeinrichtung nach Anspruch 4,
**dadurch gekennzeichnet**,
daß am Rohrteil (53) mindestens eine parallel zur Achse (47) verlaufende Nut (64) ausgebildet ist, in die ein an der Platte (56) ausgebildeter Vorsprung (65) eingreift.

7. Zerkleinerungs- und Mischeinrichtung nach Anspruch 1,
**dadurch gekennzeichnet**,
daß zwischen der Zu- und Abführeinrichtung (51, 52) und der Eingangswelle (32) ein vom Getriebegehäuse (12) in den Behälter (19) hineinragender Abweiser (3) ausgebildet ist.

8. Zerkleinerungs- und Mischeinrichtung nach Anspruch 7,
**dadurch gekennzeichnet**,
daß der Abweiser (3) eine in etwa vertikal verlaufende Innenkante (29) aufweist, die in etwa mit gleichem Abstand bzw. parallel zum Außenumfang des die Antriebswelle (6) umgebenden Lagerteils (11) des Behälters (19) verläuft.

9. Zerkleinerungs- und Mischeinrichtung nach Anspruch 7,
**dadurch gekennzeichnet**,
daß der Abweiser (3) mit dem drehbar gelagerten Getriebegehäuse (12) fest verbunden ist.

10. Zerkleinerungs- und Mischeinrichtung nach Anspruch 1,
**dadurch gekennzeichnet**,
daß der mit der Platte (56) verbundene Getriebearm (12) zusätzlich zum Messer (50) um die Hauptantriebswelle (6) der Vielzweckküchenmaschine im Behälter (19) rotiert.

11. Zerkleinerungs- und Mischeinrichtung nach Anspruch 10,
**dadurch gekennzeichnet**,
daß das Messer (50) im Uhrzeigersinn und das Getriebegehäuse (12) gegen den Uhrzeigersinn rotiert.

12. Zerkleinerungs- und Mischeinrichtung nach Anspruch 10,
**dadurch gekennzeichnet**,
daß das in dem Getriebegehäuse (12) aufgenommene Getriebe (4) aus einem Antriebsrad (8) zum Anschluß der als Steckwelle ausgebildeten Ausgangswelle (24) für das Messer (50), einem Zwischenrad (9) und einem auf der Hauptantriebswelle (6) angeordneten Ritzel (10) besteht, wobei das Zwischenrad (9) über ein mit diesem fest verbundenes zweites Ritzel (31) mit einem weiteren, oberhalb des ersten Ritzels (10) angeordneten vierten feststehenden Zahnrad (13) zum Antrieb des Getriebegehäuses (12) in Antriebsverbindung steht.

13. Zerkleinerungs- und Mischeinrichtung nach Anspruch 12,
**dadurch gekennzeichnet**,
daß das vierte Zahnrad (13) im Deckel (14) der Küchenmaschine (1) und auf einem Zapfen (15) des ersten Ritzels (10) gelagert ist.

14. Zerkleinerungs- und Mischeinrichtung nach Anspruch 13,
**dadurch gekennzeichnet**,
daß das Zwischenrad (9) auf einer Achse (16) drehbar gelagert ist, die mit ihrem einen Ende im Deckel (17) und mit ihrem anderen Ende im Boden (18) des Getriebegehäuses (12) aufgenommen ist.

15. Zerkleinerungs- und Mischeinrichtung nach Anspruch 12,
**dadurch gekennzeichnet**,
daß das am Zwischenrad (9) ausgebildete Ritzel (31) im Getriebegehäuse (12) auf dem vierten feststehenden Zahnrad (13) abrollt und das Getriebegehäuse (12) antreibt.

16. Zerkleinerungs- und Mischeinrichtung nach Anspruch 12,
**dadurch gekennzeichnet**,
daß das Übersetzungverhältnis zwischen dem auf der Hauptantriebswelle (6) angeordneten Ritzel (10) des Getriebes (4) und dem Zwischenrad (9) mindestens 1:2 groß ist.

17. Zerkleinerungs- und Mischeinrichtung nach Anspruch 12,
**dadurch gekennzeichnet**,
daß das am Getriebegehäuse (12) angeordnete Ritzel (10) gleichlaufend zum Messer (50) angetrieben wird.

## Claims

1. A chopping and mixing device for use in a multi-purpose food processor, comprising a gear arrangement (4) that is adapted to be mounted in a bowl (19) and includes a gear arm (12), an input shaft (32) rotated by a main drive shaft (6) driven by a motor of the multi-purpose food processor, and an output shaft (24) mounted on said gear arm (12) outside said input shaft (32) and engageable with at least one processing tool (5) rotary about its axis (47) for performing food processing operations, said processing tool (5) being formed by at least one rotary cutter structure (50),
**characterized in that** said rotary cutter structure (50) cooperates with at least one feed and expel device (52) suitably directing the food, that said feed and expel device (52) is formed by a plate structure (56) arranged above said cutter structure (50) and having a leading end portion (61) extending away from the bottom (25) and a trailing end portion (62) extending towards the bottom (25).

2. The chopping and mixing device as claimed in claim 1,
**characterized in that** said plate structure (56) extends essentially parallel to the bottom (25) of the bowl (19) and includes angled end portions (61, 62) in its leading (59) and trailing (60) areas when viewed in the circumferential direction.

3. The chopping and mixing device as claimed in claim 2,
**characterized in that** said plate structure (56) is vertically adjustable relative to said cutter structure (50).

4. The chopping and mixing device as claimed in claim 3,
**characterized in that** a drive shaft (57) is arranged in a tubular member (53) fastened to said gear arm (12), said plate structure (56) being slidably mounted on said tubular member.

5. The chopping and mixing device as claimed in claim 4,
**characterized in that** a locking device (63) is provided between said tubular member (53) and said plate structure (56).

6. The chopping and mixing device as claimed in claim 4,
**characterized in that** at least one groove (64) extending parallel to said axis (47) is provided on said tubular member (53) for engagement with a projection (65) provided on said plate structure (56).

7. The chopping and mixing device as claimed in claim 1,
**characterized in that** a deflector structure (3) extending from the gear housing (12) down into the interior of the bowl (19) is provided between said feed and expel device (51, 52) and said input shaft (32).

8. The chopping and mixing device as claimed in claim 7,
**characterized in that** said deflector structure (3) has an approximately vertical inner edge (29) extending about equidistantly or parallel to the outer periphery of the supporting structure (11) of the bowl (19) surrounding the drive shaft (6).

9. The chopping and mixing device as claimed in claim 7,
**characterized in that** said deflector structure (3) is fixedly connected with said rotatably mounted gear housing (12).

10. The chopping and mixing device as claimed in claim 1,
**characterized in that** in addition to the rotation of said cutter structure (50), said gear arm (12) connected to said plate structure (56) is adapted to rotate within the bowl (19) about said main drive shaft (6) of the multi-purpose food processor.

11. The chopping and mixing device as claimed in claim 10,
**characterized in that** rotation of said cutter structure (50) is in a clockwise direction while said gear housing (12) is adapted to rotate in a counterclockwise direction.

12. The chopping and mixing device as claimed in claim 10,
**characterized in that** said gear arrangement (4) received in said gear housing (12) comprises a drive gear (8) for engagement with said output shaft (24) for said cutter structure (50) configured as a plug-in shaft, an intermediate gear (9), and a first pinion (10) mounted on said main drive shaft (6), with said intermediate gear (9), through a second pinion (31) integrally formed therewith, being in driving connection with a further, fourth stationary gear (13) arranged above said first pinion (10) for driving said gear housing (12).

13. The chopping and mixing device as claimed in claim 12,
**characterized in that** said fourth gear (13) is received in a lid (14) of the food processor (1) and mounted on a trunnion (15) of said first pinion (10).

14. The chopping and mixing device as claimed in claim 13,
**characterized in that** said intermediate gear (9) is rotatably supported upon an axle (16) having its one end carried in a cover (17) while its other end is received in the bottom (18) of said gear housing (12).

15. The chopping and mixing device as claimed in claim 12,
**characterized in that** said pinion (31) formed on said intermediate gear (9) turns on said fourth stationary gear (13) in said gear housing (12), driving said gear housing (12).

16. The chopping and mixing device as claimed in claim 12,
**characterized in that** the transmission ratio of said first pinion (10) of said gear arrangement (4), which pinion is disposed on said main drive shaft (6), to said intermediate gear (9) is at least 1 to 2.

17. The chopping and mixing device as claimed in claim 12,
**characterized in that** said first pinion (10) disposed in said gear housing (12) is driven to rotate in the same direction as said cutter structure (50).

## Revendications

1. Dispositif broyeur et mélangeur pour un robot de cuisine à usage universel comportant un dispositif de transmission (4) que l'on peut mettre en place dans un récipient (19), comportant un bras de transmission (12), et comportant un arbre de sortie (32) qui est mis en rotation par un arbre principal (6) entraîné par un moteur du robot de cuisine (1) à usage universel et comprenant un arbre de sortie (24) monté en dehors de l'arbre d'entrée (32) sur le bras de transmission (12), arbre de sortie sur lequel on peut raccorder au moins un outil de travail (5) monté en rotation autour de son axe (47) pour la préparation d'aliments, l'outil de travail (5) étant formé par au moins un couteau (50) rotatif, caractérisé en ce que le couteau (50) rotatif coopère avec au moins un dispositif d'amenée et d'évacuation (52) conduisant les aliments, en ce que le dispositif d'amenée et d'évacuation (52) est formé par une plaque (56) agencée au-dessus du couteau (50), dont l'extrémité antérieure (61) est orientée en éloignement du fond (25) et dont l'extrémité postérieure (62) est orientée vers le fond (25).

2. Dispositif broyeur et mélangeur selon la revendication 1, caractérisé en ce que la plaque (56) est sensiblement parallèle au fond (25) du récipient (19) et présente en direction circonférentielle des extrémités (61, 62) repliées dans les régions antérieure (59) et postérieure (60).

3. Dispositif broyeur et mélangeur selon la revendication 2, caractérisé en ce que la plaque (56) est réglable en hauteur par rapport au couteau (50).

4. Dispositif broyeur et mélangeur selon la revendication 3, caractérisé en ce que l'arbre de commande (57) est réalisé dans une tubulure (53) fixée sur un bras de transmission (12), sur laquelle la plaque (56) est montée en déplacement.

5. Dispositif broyeur et mélangeur selon la revendication 4, caractérisé en ce qu'un dispositif de blocage (63) est réalisé entre la tubulure (53) et la plaque (56).

6. Dispositif broyeur et mélangeur selon la revendication 4, caractérisé en ce que sur la tubulure (53) est formée au moins une rainure (64) parallèle à l'axe (47), dans laquelle s'engage une saillie (65) formée sur la plaque (56).

7. Dispositif broyeur et mélangeur selon la revendication 1, caractérisé en ce qu'un racleur (3) faisant saillie depuis le boîtier de transmission (12) dans le récipient est réalisé entre le dispositif d'amenée et d'évacuation (51, 52) et l'arbre de commande (32).

8. Dispositif broyeur et mélangeur selon la revendication 7, caractérisé en ce que le racleur (3) présente une arête intérieure (29) approximativement verticale, qui s'étend à approximativement même distance et parallèlement à la périphérie extérieure du palier (11) entourant l'arbre de commande (6) du récipient (19).

9. Dispositif broyeur et mélangeur selon la revendication 7, caractérisé en ce que le racleur (3) est solidaire du boîtier de transmission (12) monté en rotation.

10. Dispositif broyeur et mélangeur selon la revendication 1, caractérisé en ce que le bras de transmission (12), relié à la plaque (56), en plus du couteau (50), tourne dans le récipient (19) autour de l'arbre principal (6) du robot de cuisine.

11. Dispositif broyeur et mélangeur selon la revendication 10, caractérisé en ce que le couteau (50) tourne dans le sens des aiguilles d'une montre et le boîtier de transmission (12) dans le sens contraire des aiguilles d'une montre.

12. Dispositif broyeur et mélangeur selon la revendication 10, caractérisé en ce que l'engrenage (4) logé dans le boîtier de transmission (12) est constitué par une roue d'entraînement (8) à raccorder à l'arbre de sortie (24) réalisé comme un arbre à enfichage pour le couteau (50), par une roue intermédiaire (9) et par un pignon (10) agencé sur l'arbre principal (6), la roue intermédiaire (9) étant en liaison entraînée par l'intermédiaire d'un second pignon (31) relié solidairement à celui-ci et d'une quatrième roue dentée (13) fixe agencée au-dessus du premier pignon (10), pour entraîner le boîtier de transmission (12).

13. Dispositif broyeur et mélangeur selon la revendication 12, caractérisé en ce que la quatrième roue dentée (13) est montée dans le couvercle (14) du robot de cuisine (1) et sur un tenon (15) du premier pignon (10).

14. Dispositif broyeur et mélangeur selon la revendication 13, caractérisé en ce que la roue intermédiaire (9) est montée rotative sur un axe (16) qui est reçu dans le couvercle (17) avec l'une de ses extrémités, et dans le fond (18) du boîtier de transmission (12) avec l'autre extrémité.

15. Dispositif broyeur et mélangeur selon la revendication 12, caractérisé en ce que le pignon (31), réalisé sur la roue intermédiaire (9) dans le boîtier de transmission (12), roule sur une quatrième roue dentée (13) et entraîne le boîtier de transmission (12).

16. Dispositif broyeur et mélangeur selon la revendication 12, caractérisé en ce que le rapport de transmission entre le pignon du bloc d'engrenage agencé sur l'arbre principal (6) et la roue intermédiaire (9) est d'au moins 1:2.

17. Dispositif broyeur et mélangeur selon la revendication 12, caractérisé en ce que le pignon (10) agencé sur le boîtier de transmission (12) est entraîné de façon synchrone par rapport au couteau (50).
